# EUROPÄISCHE PATENTSCHRIFT

(11) **EP 3 003 887 B1**
(45) Veröffentlichungstag und Bekanntmachung des Hinweises auf die Patenterteilung: **21.11.2018**
(21) Anmeldenummer: 14745074.6
(22) Anmeldetag: 28.05.2014
(51) Int. Cl.: B65D 8/00, B65D 81/113

(54) **TRANSPORTIERBARE VERPACKUNGSEINHEIT SOWIE VERFAHREN ZUM HERSTELLEN EINER SOLCHEN VERPACKUNGSEINHEIT**
TRANSPORTABLE PACKAGING UNIT AND METHOD FOR PRODUCING SAID TYPE OF PACKAGING UNIT
UNITÉ D'EMBALLAGE TRANSPORTABLE ET PROCÉDÉ POUR PRODUIRE UNE TELLE UNITÉ D'EMBALLAGE

(30) Priorität: 31.05.2013 CH 10402013; 31.05.2013 CH 10412013; 31.05.2013 CH 10422013; 24.03.2014 CH 4462014; 12.05.2014 CH 7092014
(43) Veröffentlichungstag der Anmeldung: 13.04.2016
(73) Patentinhaber: WRH Walter Reist Holding AG, 8272 Ermatingen (CH)
(72) Erfinder: RUGE, Martin, CH-4656 Starrkirch-Wil (CH)
(74) Vertreter: IPrime Rentsch Kaelin AG
(86) Internationale Anmeldenummer: PCT/EP2014/001448
(87) Internationale Veröffentlichungsnummer: WO 2014/191107

(56) Entgegenhaltungen:
- WO-A2-2004/082420
- CN-U- 201 942 318
- JP-A- 2006 016 044
- US-A- 4 184 792
- US-A- 6 050 438
- US-B2- 7 954 661

## Beschreibung

### TECHNISCHES GEBIET

Die vorliegende Erfindung bezieht sich auf das Gebiet des Transports und der Lagerung von Waren. Sie betrifft eine transportierbare Verpackungseinheit gemäss dem Oberbegriff des Anspruchs 1.

Sie betrifft weiterhin ein Verfahren zum Herstellen einer solchen Verpackungseinheit.

### STAND DER TECHNIK

Der Umgang mit Waren aller Art, die hergestellt, verpackt und schliesslich zum Zwischenhändler oder Käufer transportiert werden, erfordert, gerade auch in Zeiten des Online-Handels über das Internet, eine ausgeklügelte Logistik, die insbesondere das Ein- und Auslagern und Transportieren umfasst.

Viele der Waren des täglichen Bedarfs, Bekleidung, elektrische und elektronische Geräte und dergleichen werden bereits beim Hersteller mit einer eigenen Verpackung versehen und gegebenenfalls zu grösseren Einheiten zusammengefasst, die beispielsweise auf genormten Paletten bereitstehen. Diese Paletten werden üblicherweise mit Gabelstaplern bewegt, auf Lastwagen verladen oder aus Lastwagen entladen und zur Lagerung in Regale eines Lagers eingestellt und bei Bedarf wieder ausgelagert.

In bestimmten Bereichen der Logistik werden insbesondere automatisierte Hochregallager eingesetzt, die durch automatisierte Be- und Entladevorrichtungen in den Gängen zwischen den einzelnen Regalen betrieben werden.

Aufwändig ist bei dieser Art von Lagern, dass üblicherweise die zuletzt eingelagerte Ware als erste wieder ausgelagert werden muss, weil die Regale meist nur von einer Seite befüllt und entleert werden. Sofern die Waren zu grösseren Einheiten zusammengefasst auf genormten Paletten transportiert werden, muss eine solche grössere Einheit aufgelöst werden, um einzelne Exemplare der Ware für die weitere Behandlung bereitzustellen. Dies bereitet zusätzliche Probleme, wenn die Einheiten durch Umwickeln mit einer Folie auf der Palette zusammengehalten werden.

Es ist zwar, beispielsweise bei Hochregallagern, bekannt, Paletten mit den darauf befindlichen Waren auf zur Entladeseite hin abschüssigen Rollenbahnen in die Regale einzuschieben, so dass sich die Paletten selbsttätig zur Entladeseite hin bewegen und die nächste Palette automatisch nachrutscht, wenn die vorherige aus dem Regal herausgenommen worden ist. Gleichwohl müssen die entnommenen Paletten aus dem Lager mit aufwändigen technischen Vorrichtungen heraustransportiert werden.

Noch schwieriger ist die Situation, wenn die Waren in ihrer eigenen Verpackung einzeln ein- und ausgelagert werden. Wenn verschiedene Waren mit unterschiedlichen Verpackungsarten und/oder Verpackungsgrössen vorliegen, ist die Situation noch komplizierter. Eine automatisierte, maschinelle Ein- und Auslagerung ist in diesem Fall nur sehr schwer zu realisieren, so dass üblicherweise die Ein- und Auslagerung manuell erfolgt.

Das oben Gesagte gilt gleichermassen auch für den Transport der Waren vom Hersteller zum Lager oder vom Lager zum Zwischenhändler oder Endkunden.

In der Druckschrift JP 2006016044 wird die Bereitstellung eines Verpackungsbehälters vorgeschlagen, der sich leicht transportieren lässt, der einen Verpackgegenstand horizontal halten kann und der auch die Aufnahmeeffizienz in einem Aufnahmeraum verbessern kann.

Hierzu ist der kugelförmige Verpackungsbehälter mit einem ersten Behälter, der ein kugelförmiger Hohlkörper ist, einem zweiten Behälter, der ein in dem ersten Behälter aufgenommener kugelförmiger Hohlkörper ist, der einen Verpackgegenstand aufnimmt, und Kopplungsmitteln versehen, die den ersten Behälter und den zweiten Behälter um einen Freiheitsgrad von zwei oder mehr Achsen miteinander koppeln.

Es ist ein dritter kugelförmiger Behälter vorgesehen, der ein in dem ersten Behälter aufgenommener kugelförmiger Hohlkörper ist, der den zweiten Behälter aufnimmt, die Innenfläche des ersten Behälters und die Außenfläche des dritten Behälters sind unter Verwendung von ersten Kopplungsgliedern, die auf einer ersten geraden Linie, die durch den Mittelpunkt des dritten Behälters läuft, positioniert sind, an zwei Stellen miteinander gekoppelt und die Innenfläche des dritten Behälters und die Außenfläche des zweiten Behälters sind unter Verwendung von zweiten Kopplungsgliedern, die auf einer zweiten geraden Linie, die durch den Mittelpunkt des zweiten Behälters und senkrecht zu der ersten geraden Linie verläuft, positioniert sind, an zwei Stellen miteinander gekoppelt.

Da der kugelförmige Verpackungsbehälter eine kugelförmige Gestalt aufweist, kann eine Arbeitskraft den kugelförmigen Verpackungsbehälter zur Beförderung rollen. Demgemäss ist es nicht immer nötig, den kugelförmigen Verpackungsbehälter beim Befördern zu heben, und der kugelförmige Verpackungsbehälter kann leicht befördert werden. Ferner kann eine Rinne zum Befördern des kugelförmigen Verpackungsbehälters vorgesehen sein. In diesem Fall wird bei Vorsehen einer Neigung der Rinne der kugelförmige Verpackungsbehälter durch die befördernde Schwerkraft natürlich von einer hohen Seite zu einer niedrigen Seite gerollt. Der Innenbehälter kann stets horizontal gehalten werden, auch wenn der kugelförmige Verpackungsbehälter gerollt wird.

Nachteilig ist bei dieser Art von Verpackung und Verpackungsbehälter der aussergewöhnlich komplizierte innere Aufbau der Verpackung, der bei der Verarbeitung von grösseren Warenströmen nicht praktikabel ist. Nachteilig ist aber auch die bewegliche Lagerung der Ware beziehungsweise des Verpackungsinhalts im Verpackungsbehälter, der - wenn der Schwerpunkt der Ware nicht genau im Mittelpunkt der Kugel liegt - zu nicht beherrschbaren, taumelnden und schlingernden Bewegungsabläufen führt.

Die Druckschrift US 7,954,661 B2 offenbart einen Transportbehälter, der einen kugelförmigen Behälter sowie ein wärmespeicherndes Material umfasst, welches innerhalb des kugelförmigen Behälters angeordnet ist. Das wärmespeichernde Material weist einen Raum auf, in dem ein zu transportierender Gegenstand untergebracht werden kann. Dieser Raum befindet sich im Zentrum des kugelförmigen Behälters. Das wärmespeichernde Material umgibt den zu transportierenden Gegenstand, lebende Zellkulturen, kugelförmig, so dass praktisch die gesamte Wärme des wärmespeichernden Materials dazu verwendet werden kann, um die Temperatur des zu transportierenden Gegenstands aufrechtzuerhalten. Die Kugelform des Behälters ist gewählt, um die Wärme abstrahlende Aussenfläche zu minimieren und so die Haltezeit für die Temperatur zu verlängern. Ein rollender Transport ist für diesen Transportbehälter nicht vorgesehen.

Die Druckschrift US 6,050,438 A offenbart eine kugelförmige, geteilte Kapsel zur Aufnahme eines Artikels oder mehrere Artikel. Die Kapsel kann ohne Zerstörung getrennt werden, wobei die Teile ineinander eingreifende Verschlusselemente aufweisen, die eine stabile Verbindung der Teile bewirken, so dass die Kapsel für den Einsatz in Verkaufsautomaten geeignet ist.

Die Druckschrift GB 2 482 476 A beschreibt einen Behälter mit rundem Querschnitt. Zwei Wellen sind an der Aussenfläche des Behälters angebracht und fluchten in einer gemeinsamen Achse, die senkrecht zum runden Querschnitt steht. An den Wellen sind Zügel befestigt. Der Behälter kann über Öffnungen befüllt und entleert werden. Wenn an den Zügeln gezogen wird, rollt der Behälter um die gemeinsame Achse. Der Behälter kann kugelförmig oder zylindrisch sein. Der Transport ist auf Flüssigkeiten beschränkt.

Aus der Druckschrift CN 201942318 U ist ein intelligentes System zur Echtzeit-Bearbeitung von Bestellungen mit automatischer Zustellung von Waren an die Kunden bekannt, welches mit kugelförmigen Transportbehältern arbeitet, die jeweils eine kugelförmige Hülle und einen darin angeordneten Einsatz umfassen, der an einen in der Kugel befindlichen viereckigen, zylindrischen oder runden Behälter angepasst ist, der schliesslich die eigentlichen Waren aufnimmt. Dieses System ist ausgelegt für lange Transportwege zwischen dem Warenverkäufer und dem die Waren empfangenden Kunden über in Stadt und Land meist unterirdisch verlegte Transportröhren und -wegen.

Das Dokument WO 2004/082420 zeigt ein automatisiert transportierbares Gepäckstück. Insbesondere im Flugverkehr ist der Transfer von Gepäckstücken energieaufwändig und teuer. Ein Behälter weist eine zylindrische Lauffläche auf, die zum Rollen des Behälters ausgebildet ist. Zwei ebene Flächen bilden die Seiten des Behälters. Ein Sitz des Behälters ist ausgebildet, um ein Gepäckstück aufzunehmen. Das Abrollen des Behälters auf einer Fläche ist ermöglicht.

Das Dokument CN 201 942 318 zeigt die automatische Zustellung von Waren an Kunden auf der Basis von kugelförmigen Transportbehältern. Ein Kugelbehälter ist eine Hohlkugel. Der Kugelbehälter besteht aus zwei Kugelhälften. Einsätze für das Innere des Kugelbehälters stützen den Hohlraum. Die Einsätze bestehen aus Metall oder einem Material von gleicher Qualität wie der Kugelbehälter.

Das Dokument US 7 954 661 zeigt einen kugelförmigen Transportbehälter umfassend zwei Halbkugeln mit einem wärmespeichernden Material, das einen Raum aufweist, in dem ein zu transportierender Gegenstand untergebracht werden kann. Während dem Transport muss der Behälter aufrecht gehalten werden, um beim zu transportierenden Gegenstand z.B. ein Ausfliessen einer Flüssigkeit zu verhindern. Dazu kann in einem unteren Bereich ein Ausgleichsgewicht vorgesehen sein.

Das Dokument US 4 184 792 zeigt ein Vakuumsystem für den Transport von Personen und Waren. Kapseln oder Fahrzeuge werden in einem Röhrensystem mittels Gebläse oder Ventilatoren in einem Teilvakuum bewegt. Die Kapseln sind länglich oder kugelförmig ausgeführt. Eine kugelförmige Kapsel ist für den rollenden Transport von Waren in einem Röhrensystem vorgesehen. Aufblasbare Kissen aus Plastik oder Gummi halten die Ware.

Eine einfach herzustellende und einsetzbare Verpackungseinheit, die leicht rollend transportiert werden kann und sich flexibel an unterschiedlicher Inhaltsformen und - grössen anpassen lässt, ist wünschenswert, aber aus dem Stand der Technik nicht bekannt.

### DARSTELLUNG DER ERFINDUNG

Es ist daher eine Aufgabe der Erfindung, eine Verpackungseinheit zu schaffen, welche die gewünschten Eigenschaften aufweist, sowie ein Verfahren zu deren Herstellung anzugeben.

Die Aufgabe wird durch die Merkmale der unabhängigen Ansprüche gelöst.

Die erfindungsgemässe transportierbare Verpackungseinheit umfasst einen Verpackungsinhalt, eine den Verpackungsinhalt umgebende Hülle und ein den Verpackungsinhalt mit der Hülle verbindendes Verbindungsmittel, wobei die umgebende Hülle die äussere Form eines rollbaren Körpers aufweist. Das Verbindungsmittel fixiert den Verpackungsinhalt in der Hülle. Die Hülle ist zweiteilig und umfasst zwei Hüllensegmente, die in einer Trennebene zusammenstossen. Das Verbindungsmittel umfasst eine Folierung, die den Verpackungsinhalt umschliesst, und die in der Trennebene der Hülle auf gegenüberliegenden Seiten herausgeführt ist, und dort zwischen den zwei Hüllensegmenten klemmend fixiert ist.

Die Folierung zwischen den zwei Hüllensegmenten kann durch Reibung, Klebung oder durch Stifte oder Dornen, die sich von einem Hüllensegment durch die Folierung zum anderen Hüllensegment erstrecken, erfolgen.

Eine Ausgestaltung der Verpackungseinheit nach der Erfindung ist dadurch gekennzeichnet, dass die Hülle eine runde Raumform aufweist. Als rund in diesem Sinne wird alles angesehen, was einen vollumfänglichen, stetigen Abrollvorgang auf einer geschlossenen Umfangslinie der Hülle erlaubt.

Insbesondere weist die Hülle eine zylindrische oder tonnenförmige Form auf. Vorzugsweise weist die Hülle eine Kugelform auf.

Es ist aber auch denkbar, dass die Hülle eine polyedrische Form aufweist. Der Abrollvorgang ist in diesem Fall nicht so gleichmässig wie bei einer runden Raumform, kann jedoch angenähert werden, wenn die Einzelflächen klein gewählt werden und die Kanten zwischen den Flächen abgerundet sind.

Insbesondere ist die Hülle aus zwei gleichartigen Hälften zusammengesetzt.

Bei einer Verpackungseinheit kann der Verpackungsinhalt durch Einschliessen zwischen zwei Teilfolien so foliert sein, dass sich die ergebende Folierung ausserhalb des Verpackungsinhalts in einer Schwerpunktsebene erstreckt, die durch den Schwerpunkt des Verpackungsinhalts verläuft.

Der Schwerpunkt des Verpackungsinhalts kann im Mittelpunkt der Hülle liegen.

Eine andere Ausgestaltung der Verpackungseinheit nach der Erfindung ist dadurch gekennzeichnet, dass die Hülle als einen Innenraum umschliessende Schale ausgebildet ist, und dass die Hülle geschlossen ist. Es ist aber auch denkbar, dass die Hülle Durchbrüche aufweist oder gitter- oder netzförmig ausgebildet ist.

Insbesondere weist die Hülle eine konstante Wanddicke auf.

Eine weitere Ausgestaltung der Verpackungseinheit nach der Erfindung ist dadurch gekennzeichnet, dass das Verbindungsmittel fest mit der Hülle und/oder dem Verpackungsinhalt verbunden ist.

Insbesondere ist das Verbindungsmittel Teil der Hülle.

Alternativ dazu ist das Verbindungsmittel Teil des Verpackungsinhalts.

Eine wieder andere Ausgestaltung der Verpackungseinheit nach der Erfindung ist dadurch gekennzeichnet, dass das Verbindungsmittel eine oder mehrere Folien umfasst. Der Verpackungsinhalt wird dabei vorzugsweise in die Folien eingeschweisst und dann mit Hilfe der Folien an der Hülle fixiert.

Eine noch andere Ausgestaltung der Verpackungseinheit nach der Erfindung ist dadurch gekennzeichnet, dass das Verbindungsmittel Füllkörper umfasst, welche die Hülle ausfüllen und den Verpackungsinhalt einbettend umgeben.

Eine weitere Ausgestaltung der Verpackungseinheit nach der Erfindung ist dadurch gekennzeichnet, dass das Verbindungsmittel Abstandshalter umfasst, welche den Verpackungsinhalt auf Abstand zur Hülle halten.

Insbesondere können die Abstandshalter gasgefüllte Hohlräume aufweisen.

Eine andere Ausgestaltung der Verpackungseinheit nach der Erfindung ist dadurch gekennzeichnet, dass das Verbindungsmittel den Verpackungsinhalt in der Hülle elastisch fixiert.

Eine wieder andere Ausgestaltung der Verpackungseinheit nach der Erfindung ist dadurch gekennzeichnet, dass an der Verpackungseinheit von aussen abfragbar mindestens ein direkte oder indirekte Informationen über den Inhalt enthaltendes Element angeordnet ist. Damit kann jederzeit festgestellt werden, welcher Inhalt sich in der Verpackungseinheit befindet, so dass beim Ein- und Ausspeichern von Ware entsprechend vorgegangen werden kann.

Insbesondere ist das mindestens eine Informationen über den Inhalt enthaltende Element ein RFID-Element und/oder ein Strichcode.

Andere Arten von aufgebrachten Codes wie z.B. Matrixcode, Farbcode, Zahlencode, Thermocode oder Hologramme sind ebenfalls als Informations- und/oder Identifikationsmittel oder Sicherheitsmerkmal denkbar. Alle diese Mittel können optisch, magnetisch oder funktechnisch auslesbar sein, und zwar entweder als passive Mittel, die von aussen abgefragt werden, oder als aktive Mittel, die selbst eine Informationsübertragung durchführen.

Die Verpackungseinheit kann darüber hinaus mit einer eigenen Intelligenz ausgestattet sein, z.B. in Form von elektronischen Mitteln zur Daten- oder Signalverarbeitung, z.B. mit einem Mikroprozessor und entsprechenden Datenspeichern. Zugehörige Sende- und Empfangseinrichtungen können dabei über an der Aussenseite angebrachte Antennenelemente mit der Umgebung drahtlos Signale austauschen. Es ist aber auch denkbar, an bestimmten Stellen der Hülle von aussen zugängliche elektrische Kontakte anzuordnen, über die auf interne Schaltungen zugegriffen werden kann.

Im Zusammenhang mit internen elektronischen Einrichtungen in der Verpackungseinheit können interne Energiespeicher und/oder Energiewandler vorgesehen werden, die mechanische Energie (Feder, Gasdruck), thermische Energie (Wärmespeicher) oder elektromagnetische Energie (Kondensator, Batterie, Akkumulator, Spule etc.) speichern oder Energie erzeugen (piezoelektrischer Wandler, induktiver Wandler etc.).

Weiterhin ist es denkbar, innerhalb der Verpackungseinheit Ortungsmittel vorzusehen, mit deren Hilfe sich der Aufenthaltsort der Einheit jederzeit bestimmen und nachverfolgen lässt. Im Extremfall kommt dabei eine Ortsbestimmung mittels des GPS-Systems oder vergleichbarer Systeme in betracht. Auch können innerhalb der Verpackungseinheit Permanentmagnete angeordnet sein, die von aussen abgefragt werden oder beim Passieren bestimmter Orte Schaltvorgänge auslösen können.

Eine noch andere Ausgestaltung der Verpackungseinheit nach der Erfindung ist dadurch gekennzeichnet, dass die Hülle einen Mittelpunkt bzw. eine Mittelachse aufweist, dass der Verpackungsinhalt einen Schwerpunkt aufweist, und dass der Verpackungsinhalt in der Hülle so angeordnet ist, dass der Schwerpunkt des Verpackungsinhalts näherungsweise mit dem Mittelpunkt zusammenfällt bzw. in der Mittelachse liegt. Durch das Zusammenfallen von Schwerpunkt und Mittelpunkt beziehungsweise Mittelachse wird ein leichtes Anrollen bzw. gleichmässiges Rollen der Verpackungseinheit sichergestellt. Wenn das Gewicht des Verpackungsinhalts vergleichsweise gering ist, kann aber auch eine grössere Abweichung zwischen Schwerpunkt und Mittelpunkt beziehungsweise Mittelachse zugelassen werden.

Bei zwei gleichartigen Hälften der Hülle ist es von Vorteil, wenn die zwei gleichartigen Hälften im zusammengesetzten Zustand ineinander greifen.

Insbesondere sind für das Ineinandergreifen der gleichartigen Hälften im Verbindungsbereich der gleichartigen Hälften einrastende Verschlussvorrichtungen vorgesehen. Hierdurch kann die Hülle schnell und sicher geschlossen werden.

Ebenso ist es denkbar, dass für das Ineinandergreifen der gleichartigen Hälften im Verbindungsbereich der gleichartigen Hälften verriegelbare Verschlusselemente angeordnet sind. Auf diese Weise können beispielsweise die Hälften nach Art eines Bajonettverschlusses miteinander verbunden werden.

Das erfindungsgemässe Verfahren zum Herstellen einer Verpackungseinheit nach der Erfindung ist dadurch gekennzeichnet, dass in einem ersten Schritt der Verpackungsinhalt bereitgestellt wird, dass in einem zweiten Schritt die Hülle bereitgestellt wird, wobei die Hülle zweiteilig ist und zwei Hüllensegmente umfasst, die in einer Trennebene zusammenstossen, und wobei die Hülle geöffnet wird oder geöffnet bereitgehalten wird, und dass in einem dritten Schritt ein Verbindungsmittel, welches eine umfasst, mit dem Verpackungsinhalt verbunden wird, wobei die Folierung den Verpackungsinhalt umschliesst; der Verpackungsinhalt zusammen mit dem Verbindungsmittel in die geöffnete Hülle eingebracht wird, wobei die Folierung in der Trennebene der Hülle auf gegenüberliegenden Seiten herausgeführt wird; und die Hülle geschlossen wird, wobei die Folierung zwischen den zwei Hüllensegmenten klemmend fixiert wird.

Die Folierung zwischen den zwei Hüllensegmenten kann durch Reibung, Klebung oder durch Stifte oder Dornen, die sich von einem Hüllensegment durch die Folierung zum anderen Hüllensegment erstrecken, erfolgen.
Bei einer Variante solchen Verfahrens wird der Schwerpunkt des Verpackungsinhalts bestimmt; wird der Verpackungsinhalt anschliessend durch Einschliessen zwischen zwei Teilfolien so foliert, dass sich die ergebende Folierung (28) ausserhalb des Verpackungsinhalts in einer Schwerpunktsebene erstreckt, die durch den Schwerpunkt des Verpackungsinhalts verläuft; wird der folierte Verpackungsinhalt so in die Hülle eingebracht, dass die Schwerpunktsebene mit der Trennebene der Hülle zusammenfällt; und wird der folierte Verpackungsinhalt so in der Trennebene verschoben, dass der Schwerpunkt des Verpackungsinhalts im Mittelpunkt der Hülle liegt.

Die Aussenfläche der Hülle ist diejenige Fläche, mit der die Verpackungseinheit auf einer Unterlage abrollt. Sie sollte daher eine ausreichende Härte aufweisen, um den beim Rollvorgang auftretenden, reibenden und/oder stossenden Belastungen über einen ausreichend langen Benutzungszeitraum gewachsen zu sein.

Die Oberfläche der Hülle kann glatt ausgebildet sein, kann aber auch Noppen oder lokale Dellen wie bei einem Golfball aufweisen, um bestimmte Lauf- oder Abrolleigenschaften hervorzurufen. Des Weiteren können, wenn eine Rollbarkeit in beliebigen Richtungen nicht erwünscht ist, auf der Aussenseite ein oder mehrere umlaufende Führungswülste vorgesehen werden, die der Rollbewegung eine bestimmte Vorzugsrichtung geben.

Als Materialien kommen insbesondere geeignete Kunststoffe in Frage, die unterschiedliche Grade von Durchsichtigkeit aufweisen aber auch vollkommen undurchsichtig sein können. In Einzelfällen ist es auch denkbar, als Material für die Hülle ein widerstandsfähiges Glas einzusetzen, wie es z.B. ähnlich bei Mehrweg-Getränkeflaschen verwendet wird. In besonderen Fällen kann die Hülle aber auch aus einem geeigneten Metall oder einer Metalllegierung hergestellt sein, wenn z.B. thermische oder elektromagnetische, insbesondere z.B. Abschirm-Eigenschaften, von Bedeutung sind.

Sofern das Hüllenmaterial von seiner Art her undurchsichtig ist, kann an bestimmten Stellen der Hülle eine lokale Einsehbarkeit des Inneren vorgesehen werden, indem dort Sichtfenster angebracht werden.

### KURZE ERLÄUTERUNG DER FIGUREN

Die Erfindung soll nachfolgend anhand von Ausführungsbeispielen im Zusammenhang mit der Zeichnung näher erläutert werden. Es zeigen:
- Fig. 1: in einer teilweise geschnittenen Darstellung eine Verpackungseinheit gemäss einem ersten Ausführungsbeispiel der Offenbarung mit einer schalenförmigen kugel- oder zylinderförmigen Hülle um einen würfel- oder quaderförmigen Verpackungsinhalt und mehreren kissenförmigen Abstandshaltern zwischen Verpackungsinhalt und Hülle;
- Fig. 2: in einer teilweise geschnittenen Darstellung eine Verpackungseinheit gemäss einem Ausführungsbeispiel der Erfindung mit zu Fig. 1 vergleichbarer Hülle und vergleichbarem Verpackungsinhalt, der mittels einer Folierung zwischen den Hälften der Hülle gehalten und zusätzlich durch kissenförmige Abstandshalter abgestützt ist;
- Fig. 3: in einem Ausschnitt eine mögliche Verbindung zwischen den beiden Hälften der Hülle aus Fig. 2, zwischen der die Folierung sicher gehalten werden kann;
- Fig. 4: in einer teilweise geschnittenen Darstellung eine Verpackungseinheit gemäss einem dritten Ausführungsbeispiel der Offenbarung, bei welchem der Raum zwischen Verpackungsinhalt und Hülle durch mehrere Füllkörper vollständig ausgefüllt ist;
- Fig. 5: die Verpackungseinheit aus Fig. 4, bei welcher der Verpackungsinhalt verschoben ist, um den Schwerpunkt des Verpackungsinhalts mit dem Mittelpunkt der kugelförmigen Hülle beziehungsweise der Mittelachse der zylinderförmigen Hülle in Übereinstimmung zu bringen;
- Fig. 6: in einer teilweise geschnittenen Darstellung eine Verpackungseinheit gemäss einem vierten Ausführungsbeispiel der Offenbarung, bei welchem der Verpackungsinhalt vollständig von einer gefüllten Hülle umschlossen ist;
- Fig. 7: in einer teilweise geschnittenen Darstellung eine Verpackungseinheit gemäss einem fünften Ausführungsbeispiel der Offenbarung, bei welchem der Verpackungsinhalt durch das Ansetzen mehrerer Kugelabschnitte zu einem rollbaren Körper (hier: Kugel) ergänzt wird;
- Fig. 8: verschiedene Schritte zur Herstellung einer Verpackungseinheit gemäss Fig. 2, bei welcher der Schwerpunkt des Verpackungsinhalts in den Mittelpunkt der Hülle gelegt wird;
- Fig. 9: in einer teilweise geschnittenen Darstellung eine Verpackungseinheit gemäss einem sechsten Ausführungsbeispiel der Offenbarung, bei welchem der Verpackungsinhalt in der Hülle selbst gehalten wird, im geöffneten Zustand (Fig. 9a) und im geschlossenen Zustand (Fig. 9b);
- Fig. 10: eine Verpackungseinheit gemäss einem siebten Ausführungsbeispiel der Offenbarung bei welchem der Verpackungsinhalt von einer offenen Seite her in das Innere der Hülle eingeführt werden kann (Fig. 10b) und die offene Seite durch ein schwenkbares Visier verschliessbar ist (Fig. 10a);
- Fig. 11: in einer teilweise geschnittenen Darstellung eine Verpackungseinheit gemäss einem achten Ausführungsbeispiel der Offenbarung, bei welchem der Verpackungsinhalt in der Hülle durch loses Füllmaterial fixiert wird;
- Fig. 12: in einer teilweise geschnittenen Darstellung eine Verpackungseinheit gemäss einem achten Ausführungsbeispiel der Offenbarung, bei welchem der Verpackungsinhalt von einer offenen Seite her in das Innere der Hülle eingeführt werden kann, die dann mit einem Deckel verschliessbar ist;
- Fig. 13: eine Verpackungseinheit gemäss einem neunten Ausführungsbeispiel der Offenbarung, bei welchem die beiden Hüllensegmente nach Art eines Bajonett-Verschlusses miteinander verbindbar sind;
- Fig. 14: eine Verpackungseinheit gemäss einem zehnten Ausführungsbeispiel der Offenbarung, bei welchem der Verpackungsinhalt zwischen zwei an den Hüllensegmenten angebrachten Folien eingeklemmt wird;
- Fig. 15-17: von einer Kugel abweichende Formen der Verpackungseinheit nach der Offenbarung mit den für deren Bewegung notwendigen Führungselementen.

### WEGE ZUR AUSFÜHRUNG DER ERFINDUNG

Zentraler Bestandteil der vorliegenden Lösung ist eine Verpackungseinheit, die so ausgestaltet ist, dass sie auf einer schiefen Ebene mit ausreichender Neigung von selbst rollen kann. In der Verpackungseinheit ist der Verpackungsinhalt angeordnet, der die zu transportierende beziehungsweise zu lagernde Ware enthält. Aussen hat die Verpackungseinheit eine Form, die für das selbstständige Rollen geeignet ist. Dies kann eine Kugelform sein, eine Zylinderform, eine Tonnenform, eine Ellipsoidform oder im Extremfall eine Polyederform. Die Aussenform der Verpackungseinheit wird durch eine Hülle gebildet und bereitgestellt, welche den Verpackungsinhalt mehr oder weniger vollständig umschliesst. Die Hülle kann dabei im Extremfall einstückig sein, besteht aber meist aus mehreren Hüllensegmenten, die direkt oder indirekt miteinander verbunden werden, wenn der Verpackungsinhalt umschlossen werden soll. Die Aussenfläche der Hülle ist diejenige Fläche, mit der die Verpackungseinheit auf einer Unterlage abrollt. Sie sollte daher eine ausreichende Härte aufweisen, um den beim Rollvorgang auftretenden, reibenden und/oder stossenden Belastungen über einen ausreichend langen Benutzungszeitraum gewachsen zu sein.

Die Oberfläche der Hülle kann glatt ausgebildet sein, kann aber auch Noppen oder lokale Dellen wie bei einem Golfball aufweisen, um bestimmte Lauf- oder Abrolleigenschaften hervorzurufen. Des Weiteren können, wenn eine Rollbarkeit in beliebigen Richtungen nicht erwünscht ist, auf der Aussenseite ein oder mehrere umlaufende Führungswülste vorgesehen werden, die der Rollbewegung eine bestimmte Vorzugsrichtung geben.

Als Materialien kommen insbesondere geeignete Kunststoffe in Frage, die unterschiedliche Grade von Durchsichtigkeit aufweisen aber auch vollkommen undurchsichtig sein können. In Einzelfällen ist es auch denkbar, als Material für die Hülle ein widerstandsfähiges Glas einzusetzen, wie es z.B. ähnlich bei Mehrweg-Getränkeflaschen verwendet wird. In besonderen Fällen kann die Hülle aber auch aus einem geeigneten Metall oder einer Metalllegierung hergestellt sein, wenn z.B. thermische oder elektromagnetische, insbesondere z.B. Abschirm-Eigenschaften, von Bedeutung sind.

Sofern das Hüllenmaterial von seiner Art her undurchsichtig ist, kann an bestimmten Stellen der Hülle eine lokale Einsehbarkeit des Inneren vorgesehen werden, indem dort Sichtfenster angebracht werden.

Verpackungsinhalt und Hülle sind durch Verbindungsmittel derart miteinander verbunden, dass der Verpackungsinhalt in der Hülle fixiert ist und sich relativ zu Hülle nicht oder nur geringfügig bewegen kann. Die Verpackungseinheit bildet auf diese Weise eine feste Einheit, die sich wie ein Vollkörper auf weitgehend vorhersehbaren Bahnen rollend bewegt.

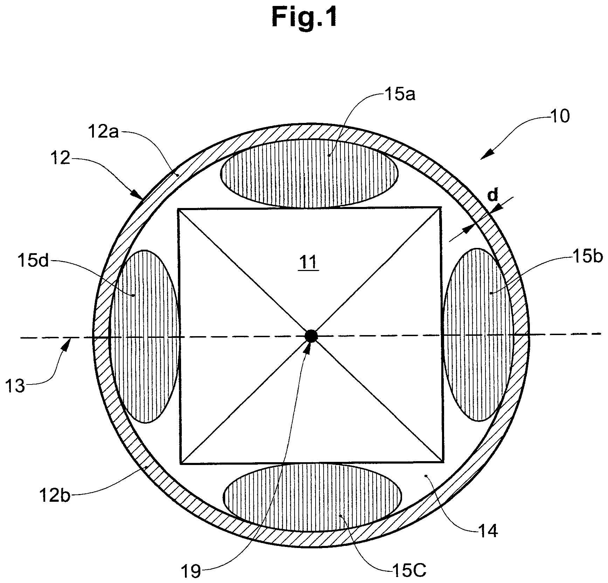

In Fig. 1 ist in einer teilweise geschnittenen Darstellung eine Verpackungseinheit gemäss einem ersten Ausführungsbeispiel der Offenbarung dargestellt. Die Verpackungseinheit 10 umfasst einen (im Beispiel würfel- oder quaderförmigen) Verpackungsinhalt 11, der mit Abstand von einer geschlossenen Hülle 12 umgeben ist, die aus zwei halbschalenförmigen Hüllensegmenten 12a,b zusammengesetzt ist. Der Verpackungsinhalt 11 ist in diesem Beispiel als Paket dargestellt, in welchem die eigentliche Ware verpackt ist. Die Hülle 12 hat eine Wand mit einer gleichmässigen Wanddicke d. Selbstverständlich kann die Wanddicke aber auch variieren. Weiterhin können an der Hülle 12 innen oder aussen Verstärkungselemente angebracht oder angeformt sein, wie zum Beispiel Rippen, Sicken oder dergleichen, welche insbesondere die Hülle 12 mechanisch stabilisieren. Die Hülle kann ein- aber auch mehrlagig ausgebildet sein.

Im Beispiel der Fig. 1 ist der Verpackungsinhalt 11 mit seinen Diagonalen kleiner als der Innendurchmesser der Hülle 12, so dass ohne zusätzliche Fixierungsmittel der Verpackungsinhalt 11 in der Hülle 12 beweglich wäre und beim Rollen der Verpackungseinheit 10 zu Beschädigungen am Verpackungsinhalt 11 oder an der Hülle 12 führen würde. Zudem würde die Verpackungseinheit 10 beim Rollen nicht vorhersagbare Bewegungen ausführen, die beim Transport unerwünscht sind. Der Verpackungsinhalt 11 ist daher in der Hülle 12 mittels mehrerer Abstandshalter 15a-d fixiert. Die Abstandshalter können unterschiedliche Formen aufweisen und an unterschiedlichen Positionen zwischen Verpackungsinhalt 11 und Hülle 12 angeordnet sein. Im Beispiel der Fig. 1 haben die Abstandshalter 15a-d eine Kissenform und sind jeweils zwischen einer Seitenfläche des Verpackungsinhalts 11 und der Hülle 12 positioniert. Die Abstandshalter 15a-d sind vorzugsweise elastisch verformbar, so dass sie mit einer gewissen Kraft gegen den Verpackungsinhalt 11 drücken, aber auch während des Transports Stösse abfangen und vom Verpackungsinhalt 11 fernhalten können.

Die Abstandshalter 15a-d können beispielsweise aus einem elastischen Kunststoffschaum bestehen. Es können aber auch gasgefüllte Kissen sein, wie sie beim Verpacken von Waren Anwendung finden. Die Abstandshalter 15a-d können an der Innenwand der Hülle 12 oder am Verpackungsinhalt 11 selbst befestigt sein. Sie können aber auch frei zwischen Verpackungsinhalt 11 und der Hülle 12 liegen, wobei ihre Position beispielsweise durch die Reibung zwischen Abstandshalter15a-d und Innenwand der Hülle 12 fixiert ist. Auch können die Abstandshalter Teil einer Folie sein. Selbstverständlich können die Abstandshalter 15a-d auch auf spezielle Weise vorgeformt sein, um eine bessere Anpassung an den Verpackungsinhalt 11 und/oder die Hülle 12 zu gewährleisten. So ist es beispielsweise denkbar, in die Abstandshalter 15a-d Vertiefungen in Form einer Würfelecke einzuformen, um sie dann - anders als in Fig. 1 dargestellt - sicher an den Würfelecken des Verpackungsinhalts 11 anordnen zu können.

Wenn der Verpackungsinhalt 11 durch die Abstandshalter 15a-d in der Hülle 12 in der in Fig. 1 dargestellten Weise fixiert ist, sollte die Position des Verpackungsinhalts 11 innerhalb der Hülle 12 vorzugsweise so gewählt sein, dass der Schwerpunkt 19 des Verpackungsinhalts mit dem Mittelpunkt der Hülle 12 (bei einer Hülle 12 mit Kugelform) zusammenfällt. Gewisse Abweichungen zwischen Kugelmittelpunkt und Schwerpunkt 19 können, abhängig von dem Gesamtgewicht des Verpackungsinhalts 11, toleriert werden. Bei einem schweren Verpackungsinhalt 1 1 führt jedoch eine grössere Abweichung zu ungleichmässigen Bewegungsmustern der Verpackungseinheit 10, die den Transport erschweren. Im Zusammenhang mit einem Verfahren zur Herstellung einer Verpackungseinheit nach der Erfindung wird weiter unten noch darauf eingegangen, wie die Übereinstimmung zwischen Schwerpunkt 19 und Mittelpunkt der Verpackungseinheit 10 auf einfache Weise hergestellt werden kann.

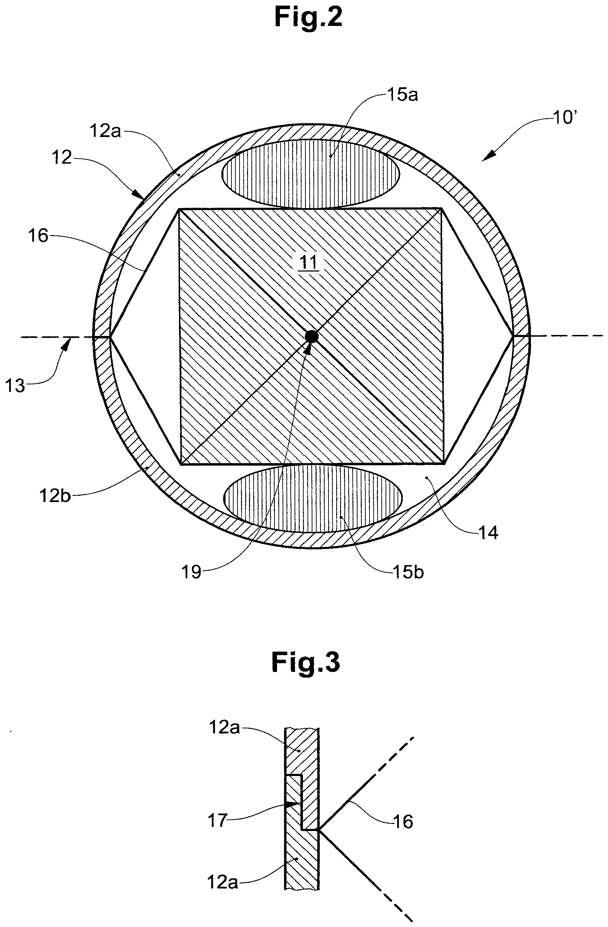

Eine andere Art der Fixierung ist in Fig. 2 dargestellt. Die Hülle 12 ist bei der Verpackungseinheit 10' dieselbe wie in Fig. 1. Dasselbe gilt für den Verpackungsinhalt 11. Die fixierende Verbindung wird in Fig. 2 einerseits wie in Fig. 1 durch Abstandshalter 15a,b bewirkt, andererseits wird aber auch eine Folierung 16 eingesetzt, die den Verpackungsinhalt 11 umschließt, in der Trennebene 13 der Hülle 12 auf gegenüberliegenden Seiten herausgeführt ist und dort zwischen den beiden Hüllensegmenten 12a und 12b klemmend fixiert ist. Die Fixierung durch die Folierung 16 hat den Vorteil, dass sie mit bekannten Verfahren schnell und effektiv durchgeführt werden kann.

Die Folierung 16 kann zwischen den Hüllensegmenten 12a und 12b durch Reibung, Klebung oder durch Stifte oder Dorne erfolgen, die sich von einem Hüllensegment durch die Folierung 16 zum anderen Hüllensegment erstrecken. Um im Falle der Reibung oder Klebung die wirksamen Flächen zu vergrößern, kann ein überlappender Anschluss 17 gemäß Fig. 3 vorgesehen werden.

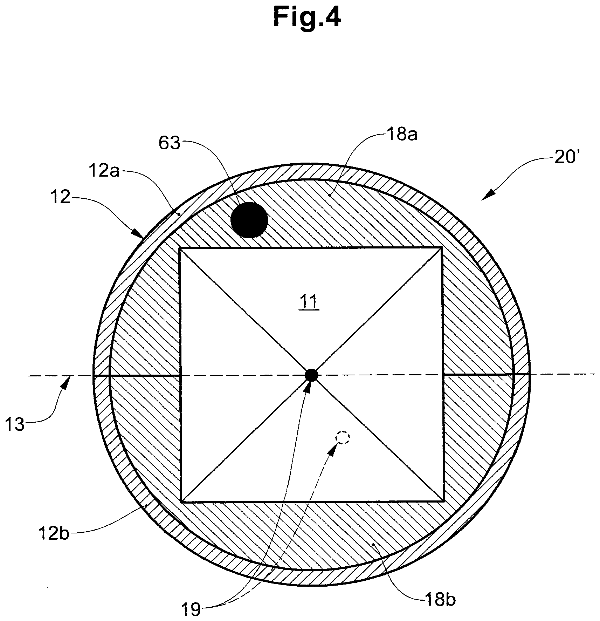

Eine weitere Art der Verbindung zwischen Verpackungsinhalt 11 und zweiteiliger Hülle 12 ist in Fig. 4 dargestellt. Jedes der halbschalenförmigen Hüllensegmente 12a,b ist in diesem Fall mit einem Füllkörper 18a,b versehen, der den Raum zwischen Halbschale und Verpackungsinhalt 11 vollständig ausfüllt. Die Füllkörper 18a,b können frei zwischen Hülle 12 und Verpackungsinhalt 11 angeordnet sein. Die Fixierung erfolgt dann durch Formschluss beziehungsweise Reibschluss. Die Füllkörper 18a,b können aber auch wahlweise am Verpackungsinhalt 11 und/oder an der Innenseite der Hülle 12 beziehungsweise der Hüllensegmente 12a,b befestigt, zum Beispiel angeklebt, sein. Die Füllkörper 18a,b können vorgefertigte Elemente sein; es ist aber auch denkbar, dass sie durch Einfüllen und späteres Verfestigen eines geeigneten Materials, beispielsweise eines Schaumstoffs, in die Zwischenräume zwischen Verpackungsinhalt 11 und Hülle 12 entstehen. Im letztgenannten Fall ist es zweckmäßig, Trennfolien um den Verpackungsinhalt herum und in der Trennebene 13 vorzusehen, damit der Verpackungsinhalt 11 später einfach und sicher entnommen werden kann.

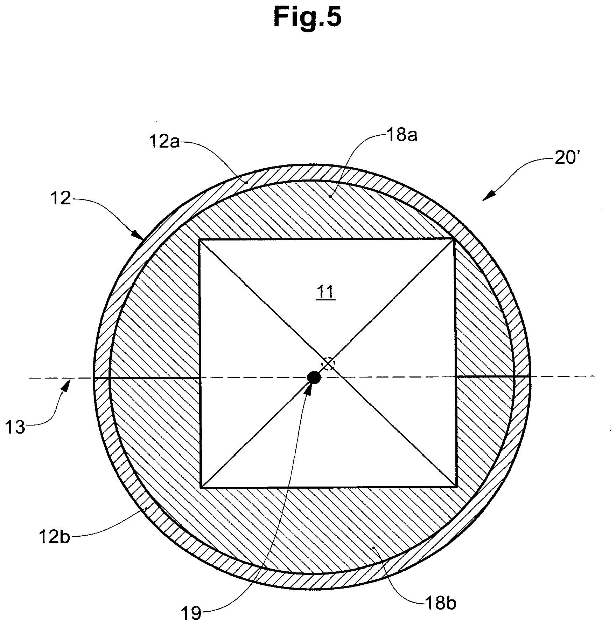

In den bisher gezeigten und besprochenen Beispielen befand sich der Schwerpunkt 19 des Verpackungsinhalts 11 im Mittelpunkt des (würfelförmigen) Verpackungsinhalts 11. Eine symmetrische Anordnung des Verpackungsinhalts 11 in der Hülle 12 reichte daher aus, den Schwerpunkt 19 in Übereinstimmung mit dem Mittelpunkt der (kugelförmigen) Hülle 12 zu bringen, beziehungsweise auf die Mittelachse einer Hülle mit Zylinderform. Verlagert sich der Schwerpunkt 19 demgegenüber aus dem Mittelpunkt des Verpackungsinhalts 11 heraus, wie dies in Fig. 5 dargestellt ist, kann bei der Verpackungseinheit 20' der Schwerpunkt 19 dadurch in den Mittelpunkt der Hülle 12 gebracht werden, dass der Verpackungsinhalt 11 insgesamt innerhalb der Hülle 12 um ein entsprechendes Stück verschoben angeordnet wird. Es versteht sich dabei von selbst, dass die Füllkörper 18a,b oder andere Verbindungsmittel entsprechend angepasst werden müssen, um den Verpackungsinhalt 11 in der neuen Lage zu sichern. Ist die Lage des Schwerpunkts 19 von vornherein bekannt, können die Füllkörper 18a,b entsprechend ausgebildet werden. Bei nachträglichem Einfüllen von Füllmaterial ergibt sich diese Anpassung von selbst.

Es ist aber auch denkbar, bei einem verschobenen Schwerpunkt 19 des Verpackungsinhalts 11 (gestrichelt in Fig. 4) eine Korrektur dahin gehend durchzuführen, dass die symmetrische Anordnung gemäß Fig. 4 beibehalten wird, jedoch innerhalb der Verpackungseinheit ein Ausgleichsgewicht 63 eingebracht wird, welches den Schwerpunkt des Gesamtsystems Verpackungsinhalt 11 plus Ausgleichsgewicht 63 wieder in Übereinstimmung mit dem Mittelpunkt der Hülle 12 bringt.

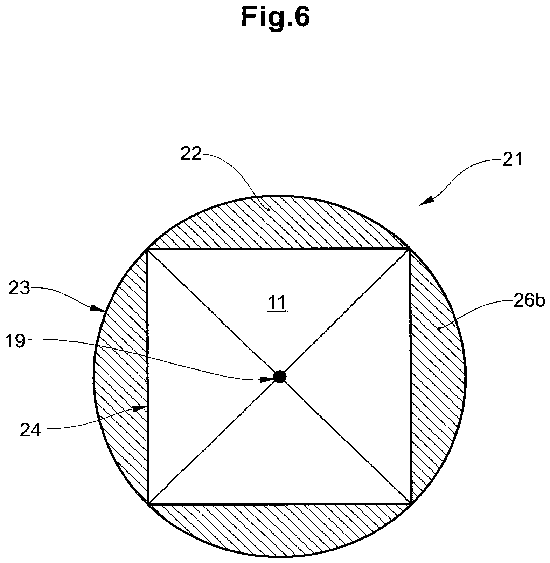

Eine andere Möglichkeit, eine Verpackungseinheit in Form eines Rollkörpers zu erzeugen, besteht gemäß Fig. 6 darin, den Verpackungsinhalt 11 mit einer einstückigen Hülle 22 zu umhüllen, indem beispielsweise der Verpackungsinhalt 11 in eine entsprechende kugelförmige Hohlform eingelegt und dann mit einem geeigneten Material umhüllt wird. Zur besseren Trennbarkeit von Verpackungsinhalt 11 und Hülle 22 kann der Verpackungsinhalt 11 mit einer Trennschicht 24 umgeben sein. Darüber hinaus kann die so gebildete Verpackungseinheit 21 außen mit einer widerstandsfähigen Deckschicht 23 versehen werden, die das Rollen erleichtert und die Verpackungseinheit 21 insgesamt schützt. Die Hülle 22 kann beispielsweise aus aufgeschäumtem Material wie Styropor oder dergleichen bestehen, das in die Hohlform eingebracht wird und sich dort verfestigt. Auch in diesem Fall kann natürlich eine Korrektur beziehungsweise Verschiebung des Schwerpunkts 19 vorgenommen werden.

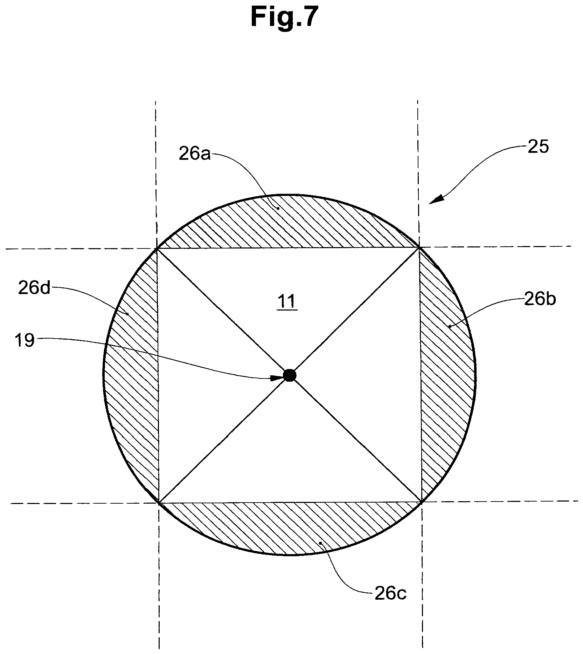

Es ist aber auch denkbar, gemäß Fig. 7 an den Außenseiten des (würfelförmigen) Verpackungsinhalts 11 Kugelabschnitte 26a-d anzubringen, die dann in ihrer Gesamtheit eine den Verpackungsinhalt 11 umhüllende Kugel ergeben und so eine rollfähige Verpackungseinheit 25 bilden. Die Kugelabschnitte 26a-d können aufgeklebt und zusätzlich oder alternativ durch außen umlaufende, ringförmige Sicherungselemente wie Reifen oder Bänder oder Folien zusammengehalten werden.

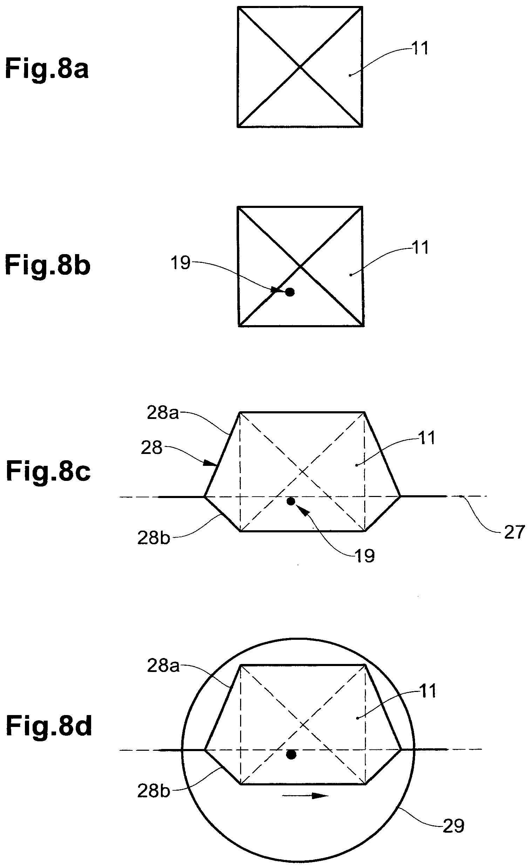

Wenn der Verpackungsinhalt 11 beispielsweise gemäß Fig. 2 mit einer Folierung in der Hülle fixiert wird, kann die Folierung dazu verwendet werden, eine exzentrische Lage des Schwerpunkts 19 des Verpackungsinhalts 11 zu korrigieren. In Fig. 8 sind die wesentlichen Schritte eines entsprechenden Verfahrens gezeigt. Ausgehend von einem Verpackungsinhalt 11 (Fig. 8(a)) wird zunächst nach einer an sich bekannten Methode (siehe zum Beispiel die Druckschriften US 5,301,544 A oder. WO 03019122 A1) der Schwerpunkt 19 des Verpackungsinhalts 1 1 bestimmt (Fig. 8(b)). Die anschließende Folierung, bei der der Verpackungsinhalt 11 zwischen zwei Teilfolien 28a,b eingeschlossen wird, so durchgeführt, das sich die ergebende Folierung 28 außerhalb des Verpackungsinhalts 11 in einer Schwerpunktsebene 27 erstreckt, die durch den Schwerpunkt 19 verläuft (Fig. 8(c)). Wenn danach der folierte Verpackungsinhalt 11 in die Hülle 29 so eingebracht wird, dass die Schwerpunktsebene 27 mit der Trennebene der Hülle 29 zusammenfällt, liegt der Schwerpunkt 19 bereits in der Trennebene der Hülle. Es ist da nur noch eine Verschiebung in der Trennebene notwendig (siehe Pfeil), um schließlich den Schwerpunkt 19 in den Mittelpunkt der Hülle zu bringen (Fig. 8(d)).

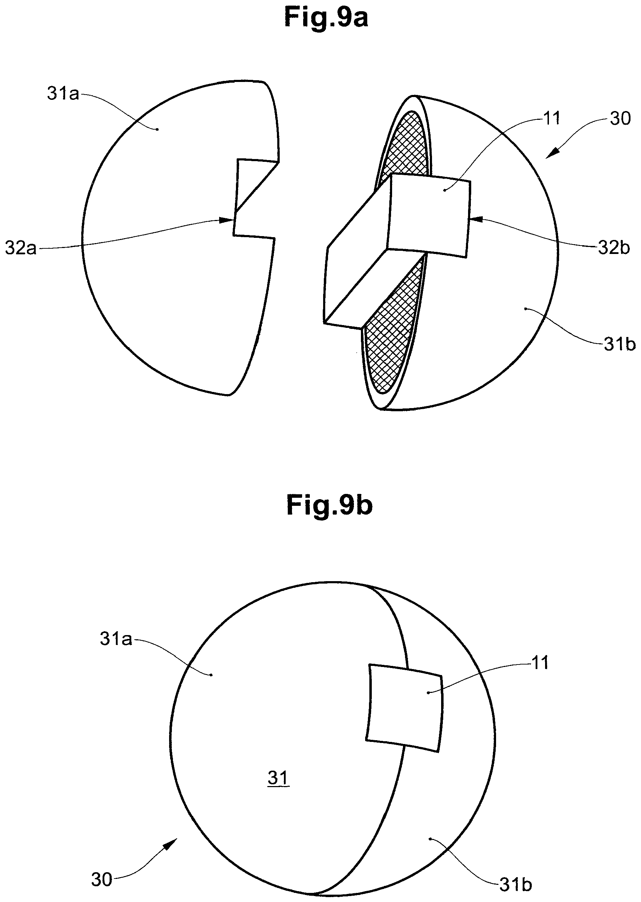

In den bisher besprochenen Beispielen war der Verpackungsinhalt 11 innerhalb der Hülle mit Abstand zur Hülle angeordnet. Dies ist jedoch nicht zwingend notwendig. Fig. 9 zeigt ein Ausführungsbeispielen einer Verpackungseinheit 30, bei der der Verpackungsinhalt 11 sich in einer Längsrichtung soweit quer durch die zwei Hüllensegmente 31a und 31b umfassende Hülle 31 erstreckt, dass er mit seinen in Längsrichtung angeordneten Enden direkt in die Hülle 31 eingreift. Hierzu sind in der Hülle 31 entsprechende Ausnehmungen 32a und 32b vorgesehen, mit denen die Hüllensegmente 31a und 31b den Verpackungsinhalt 11 umgreifen und halten. Ein Auffüllen der verbleibenden Räume zwischen Verpackungsinhalt 11 und Hülle 31 ist in diesem Fall nicht zwingend notwendig, kann auch aus Gründen der Stabilität angeraten sein.

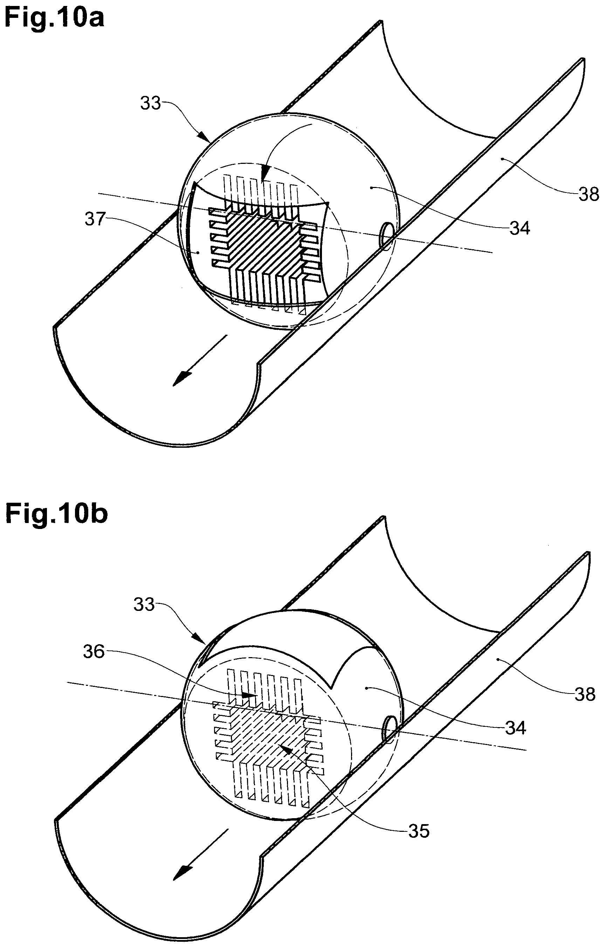

Weiterhin ist es auch denkbar, gemäß Fig. 10 eine Verpackungseinheit 33 zu schaffen, bei der eine einstückige Hülle 34 vorliegt, die einen Aufnahmeraum 35 enthält, der von einer offenen Seite her mit Verpackungsinhalt geführt werden kann. Die Verbindung zwischen dem in Fig. 10 nicht dargestellten Verpackungsinhalt und der Hülle 34 wird durch flexibel biegbare, fingerförmige Anpasselemente 36 vermittelt, die in den Aufnahmeraum 35 hineinragen. Die Öffnung in der Hülle 34 kann durch ein um eine Achse schwenkbares Visier 37 verschlossen werden (Fig. 10(a)), dass zum Laden der Hülle 34 mit dem Verpackungsinhalt aufgeschwenkt wird (Fig. 10(b)). Das Visier 37 ist so geformt und angebracht, das es im geschlossenen Zustand den fehlenden Teil der kugelförmigen Höhle 34 ergänzt.

Wie in Fig. 10 beispielhaft gezeigt wird, können alle bisher beschriebenen kugelförmigen Verpackungseinheiten auf einfache Weise in einer von der Querschnittskontur her entsprechend ausgelegten, abschüssigen Laufrinne 38 mittels Schwerkraft rollend bewegt werden, um beispielsweise ein- oder ausgelagert zu werden. Es versteht sich von selbst, dass anstelle der Laufrinne 38 ein Rohr mit einem entsprechenden Innendurchmesser eingesetzt werden kann.

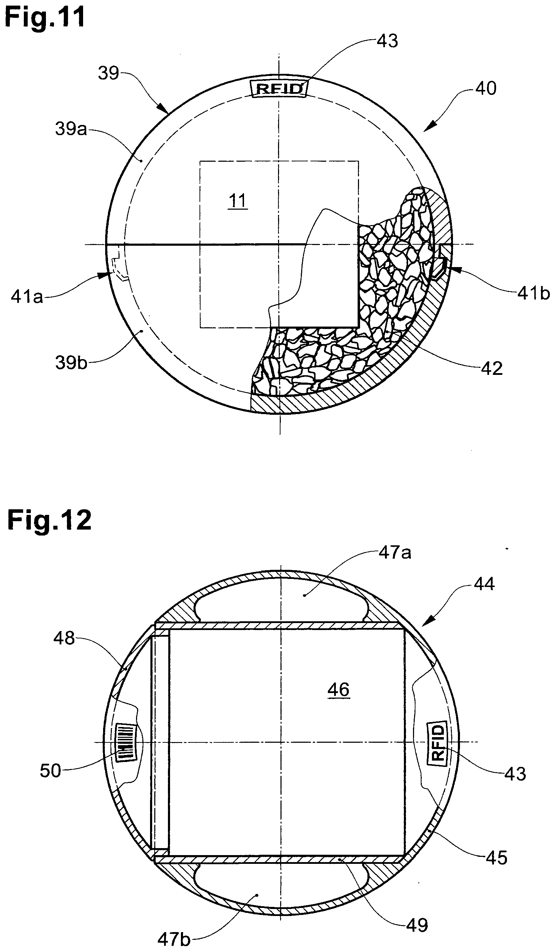

Ein weiteres Ausführungsbeispiel einer Verpackungseinheit nach der Offenbarung ist in Fig. 11 wiedergegeben. Die dort dargestellte Verpackungseinheit 40 setzt sich wiederum aus einer Hülle 39 und einem Verpackungsinhalt 11 zusammen. Die Hülle 39 besteht aus zwei Hüllensegmenten 39a,b, die durch geeignete Verschlussvorrichtungen 41a,b miteinander einrastend und wieder lösbar verbunden sind. Der Verpackungsinhalt 11 ist in diesem Fall innerhalb der Hülle 39 mittels flockenartigem Füllmaterial 42 weitgehend fixiert und stosssicher gelagert. Das Füllmaterial 42 umfasst vorzugsweise unregelmässig geformte Flocken oder Chips aus Kunststoff oder einem biologisch abbaubaren Material, wie sie beispielsweise aus der Verpackungstechnik bekannt sind, die sich miteinander verhaken und eine Bewegung praktisch unmöglich machen. Das Füllmaterial 42 kann auf einfache Weise in die offene Hülle 39 eingeschüttet oder eingeblasen werden.

Um den Verpackungsinhalt 11 jederzeit identifizierbar zu machen, ohne dass die Verpackungseinheit 40 geöffnet werden muss, kann an der Hülle 39 aussen oder innen ein "Tag", insbesondere ein RFID-Element oder -Tag 43 angebracht sein, dass mit entsprechenden drahtlos arbeitenden Mitteln ausgelesen werden kann. Alternativ oder zusätzlich zum RFID-Element 43 kann - wie in Fig. 12 gezeigt - ein Strichcode 50 vorgesehen werden. Beide Elemente enthalten Informationen über den Verpackungsinhalt 11, die eine eindeutige Identifikation des Verpackungsinhalts 11 möglich machen. Andere Arten von aufgebrachten Codes wie z.B. Matrixcode, Farbcode, Zahlencode, Thermocode oder Hologramme sind ebenfalls als Informations- und/oder Identifikationsmittel oder Sicherheitsmerkmal denkbar. Alle diese Mittel können optisch, magnetisch oder funktechnisch auslesbar sein, und zwar entweder als passive Mittel, die von aussen abgefragt werden, oder als aktive Mittel, die selbst eine Informationsübertragung durchführen.

Die Verpackungseinheit kann darüber hinaus mit einer eigenen Intelligenz ausgestattet sein, z.B. in Form von elektronischen Mitteln zur Daten- oder Signalverarbeitung, z.B. mit einem Mikroprozessor und entsprechenden Datenspeichern. Zugehörige Sende- und Empfangseinrichtungen können dabei über an der Aussenseite angebrachte Antennenelemente mit der Umgebung drahtlos Signale austauschen. Es ist aber auch denkbar, an bestimmten Stellen der Hülle von aussen zugängliche elektrische Kontakte anzuordnen, über die auf interne Schaltungen zugegriffen werden kann.

Im Zusammenhang mit internen elektronischen Einrichtungen in der Verpackungseinheit können interne Energiespeicher und/oder Energiewandler vorgesehen werden, die mechanische Energie (Feder, Gasdruck), thermische Energie (Wärmespeicher) oder elektromagnetische Energie (Kondensator, Batterie, Akkumulator, Spule etc.) speichern oder Energie erzeugen (piezoelektrischer Wandler, induktiver Wandler etc.).

Weiterhin ist es denkbar, innerhalb der Verpackungseinheit Ortungsmittel vorzusehen, mit deren Hilfe sich der Aufenthaltsort der Einheit jederzeit bestimmen und nachverfolgen lässt. Im Extremfall kommt dabei eine Ortsbestimmung mittels des GPS-Systems oder vergleichbarer Systeme in betracht. Auch können innerhalb der Verpackungseinheit Permanentmagnete angeordnet sein, die von aussen abgefragt werden oder beim Passieren bestimmter Orte Schaltvorgänge auslösen können.

Ein weiteres Ausführungsbeispiel einer Verpackungseinheit nach der Offenbarung ist in Fig. 12 dargestellt. Die dort gezeigte Verpackungseinheit 44 umfasst eine Hülle 45 mit einem durch eine zylindrische Innenwand 49 abgegrenzten Innenraum 46 zur Aufnahme des (nicht gezeigten) Verpackungsinhalts. Der Innenraum 46 ist von einer Seite durch eine koaxial angeordnete runde Öffnung zugänglich, die mit einem entsprechenden Deckel 48 verschlossen werden kann. Der Deckel 48 ist dabei mit seiner Aussenseite Teil der kugelförmigen Hülle 45. Durch die Ausbildung des zylindrischen Innenraums 46 können ausserhalb der Innenwand 49 gewichtsreduzierende Aussparungen vorgesehen werden, wie beispielsweise ein umlaufender Hohlraum 47. Auch in diesem Fall dienen wieder ein RFID-Element 43 und/oder ein Strichcode 50 zur Identifikation des Verpackungsinhalts.

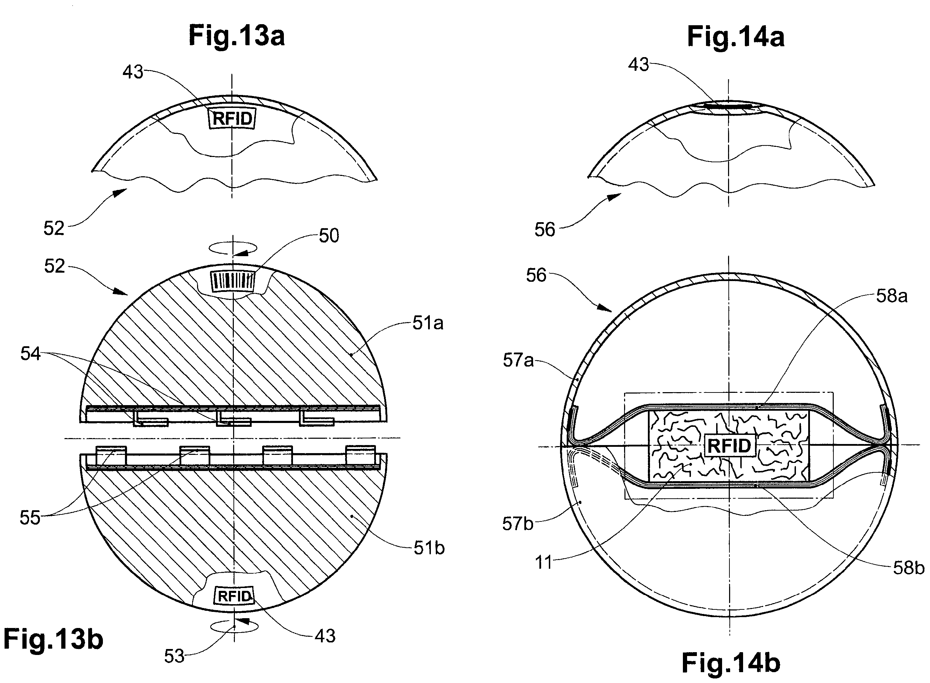

Gemäss Fig. 13 können bei einer Verpackungseinheit 52 zur Verbindung der halbkugelartigen Hüllensegmente 51a,b aufeinander abgestimmte und ineinander greifende Verschlusselemente 54, 55 vorgesehen werden, die eine lösbare Verbindung der Hüllensegmente 51a,b nach Art eines Bajonettverschlusses ermöglichen. Das Verschliessen und Öffnen der Verpackungseinheit 52 geschieht in diesem Fall durch gegenseitiges Verdrehen der Hüllensegmente 51a,b um die Drehachse 53 (Fig. 13(b)). Der Verpackungsinhalt ist hier nicht gezeigt. Ein RFID-Element 43 kann aussen auf der Hülle (Fig. 13(b)), auch innerhalb der Hülle (Fig. 13(a)) angeordnet sein.

Eine zu Fig. 2 vergleichbare Art der Fixierung des Verpackungsinhalts 11 in der Hülle zeigt die Fig. 14. Die hier dargestellte Verpackungseinheit 56 umfasst zwei Hüllensegmente 57a,b. Die offene Seite jedes Hüllensegmentes ist mit einer gespannten, aber elastisch nachgebenden Folie oder Membran verschlossen, die als Fixierelement 58a,b wirkt. Die beiden Folien/Membranen beziehungsweise Fixierelemente 58a,b klemmen beim Schliessen der Hülle den Verpackungsinhalt 11 zwischen sich ein, so dass dieser sicher gehalten wird. Auch hier kann wieder ein RFID-Element 43 vorgesehen werden (Fig. 14(a)), welches sicher in einer Vertiefung auf der Aussenseite der Hülle untergebracht werden kann (Fig. 14 (b)).

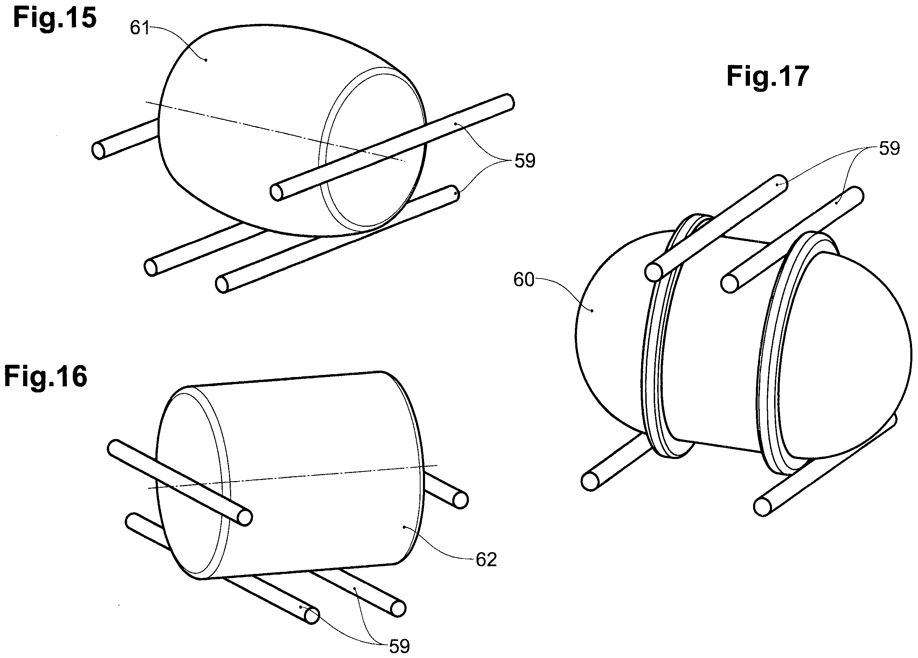

Obwohl bei den bisherigen Erläuterungen weitgehend kugelförmige Verpackungseinheiten besprochen wurden, war bereits weiter oben darauf hingewiesen worden, dass auch andere Rollkörperformen im Rahmen der Erfindung eingesetzt werden können. Fig. 15-17 zeigen entsprechende Beispiele: Die Verpackungseinheit 61 der Fig. 15 hat die äussere Form Tonne mit einer bauchigen Aussenseite. Die Verpackungseinheit 62 der Fig. 16 ist zylindrisch mit geraden Seitenflächen. Die Verpackungseinheit 60 der Fig. 17 hat einen zylindrischen Mittelteil und halbkugelförmige Endteile. Allen Fällen ist gemeinsam, dass sie Führungselemente 59 benötigen, um beim Transport eine geordnete und vorhersagbare Bewegung zu vollführen.

## Patentansprüche

1. Transportierbare Verpackungseinheit (10'), umfassend einen Verpackungsinhalt (11), eine den Verpackungsinhalt (11) umgebende Hülle (12, 29) und ein den Verpackungsinhalt (11)mit der Hülle (12, 29) verbindendes Verbindungsmittel (16, 28), wobei die umgebende Hülle (12, 29) die äussere Form eines rollbaren Körpers aufweist, wobei das Verbindungsmittel (16, 28) den Verpackungsinhalt (11) in der Hülle (12, 29) fixiert, und wobei die Hülle zweiteilig ist und zwei Hüllensegmente (12a, 12b) umfasst, die in einer Trennebene (13) zusammenstossen, **dadurch gekennzeichnet, dass** das Verbindungsmittel eine Folierung (16, 28a, 28b) umfasst, die den Verpackungsinhalt umschliesst, und die in der Trennebene der Hülle auf gegenüberliegenden Seiten herausgeführt ist, und dort zwischen den zwei Hüllensegmenten klemmend fixiert ist.

2. Verpackungseinheit nach Anspruch 1, **dadurch gekennzeichnet, dass** die Hülle (12, 29) eine runde Raumform, vorzugsweise eine zylindrische oder tonnenförmige Form (60, 61, 62) oder eine Kugelform aufweist, oder dass die Hülle vorzugsweise eine polyedrische Form aufweist.

3. Verpackungseinheit nach einem der Ansprüche 1 bis 2, **dadurch gekennzeichnet, dass** der Verpackungsinhalt (11) durch Einschliessen zwischen zwei Teilfolien (28a, 28b) so foliert ist, dass sich die ergebende Folierung (28) ausserhalb des Verpackungsinhalts in einer Schwerpunktsebene (27) erstreckt, die durch den Schwerpunkt (19) des Verpackungsinhalts verläuft.

4. Verpackungseinheit nach einem der Ansprüche 1 bis 3, **dadurch gekennzeichnet, dass** der Schwerpunkt (19) des Verpackungsinhalts (11) im Mittelpunkt der Hülle (12, 29) liegt.

5. Verpackungseinheit nach Anspruch 1, **dadurch gekennzeichnet, dass** das Verbindungsmittel (16, 28) fest mit der Hülle (12, 29) und/oder dem Verpackungsinhalt (11) verbunden ist, wobei das Verbindungsmittel vorzugsweise Teil der Hülle (34) oder Teil des Verpackungsinhalts (11) ist.

6. Verpackungseinheit nach Anspruch 1, **dadurch gekennzeichnet, dass** das Verbindungsmittel weiter Abstandshalter (15a-d) umfasst, welche den Verpackungsinhalt (11) auf Abstand zur Hülle (12) halten, wobei die Abstandshalter (15a-d) vorzugsweise gasgefüllte Hohlräume aufweisen, oder dass das Verbindungsmittel (16, 28) den Verpackungsinhalt (11) in der Hülle (12, 29) elastisch fixiert.

7. Verpackungseinheit nach Anspruch 1, **dadurch gekennzeichnet, dass** an der Verpackungseinheit (10') von aussen abfragbar mindestens ein direkte oder indirekte Informationen über den Inhalt enthaltendes Element (43, 50) angeordnet ist, wobei das mindestens eine Informationen über den Inhalt enthaltende Element vorzugsweise ein RFID-Element (43) und/oder ein Strichcode (50) ist.

8. Verpackungseinheit nach Anspruch 1, **dadurch gekennzeichnet, dass** die Hülle (12, 29) einen Mittelpunkt bzw. eine Mittelachse aufweist, dass der Verpackungsinhalt (11) einen Schwerpunkt (19) aufweist, und dass der Verpackungsinhalt (11) in der Hülle (12, 29) so angeordnet ist, dass der Schwerpunkt (19) des Verpackungsinhalts (11) näherungsweise mit dem Mittelpunkt zusammenfällt bzw. in der Mittelachse liegt.

9. Verpackungseinheit nach Anspruch 1, **dadurch gekennzeichnet, dass** die Hülle (12, 29) aus zwei gleichartigen Hälften (12a, 12b) zusammengesetzt ist, die im zusammengesetzten Zustand ineinander greifen (17).

10. Verpackungseinheit nach Anspruch 9, **dadurch gekennzeichnet, dass** für das Ineinandergreifen der gleichartigen Hälften (12a,b) im Verbindungsbereich der gleichartigen Hälften (12a,b) einrastende Verschlussvorrichtungen (41a,b) vorgesehen sind, oder dass für das Ineinandergreifen der gleichartigen Hälften (12a,b) im Verbindungsbereich der gleichartigen Hälften (12a,b) verriegelbare Verschlusselemente (54, 55) angeordnet sind.

11. Verfahren zum Herstellen einer Verpackungseinheit nach einem der Ansprüche 1 bis 5, **dadurch gekennzeichnet, dass** in einem ersten Schritt der Verpackungsinhalt (11) bereitgestellt wird, dass in einem zweiten Schritt die Hülle (12, 29) bereitgestellt wird, wobei die Hülle zweiteilig ist und zwei Hüllensegmente (12a, 12b) umfasst, die in einer Trennebene (13) zusammenstossen, und wobei die Hülle geöffnet wird oder geöffnet bereitgehalten wird, und dass in einem dritten Schritt ein Verbindungsmittel (16, 28), welches eine Folierung (16, 28a, 28b) umfasst, mit dem Verpackungsinhalt verbunden wird, wobei die Folierung den Verpackungsinhalt umschliesst; der Verpackungsinhalt (11) zusammen mit dem Verbindungsmittel in die geöffnete Hülle (12, 29) eingebracht wird, wobei die Folierung in der Trennebene der Hülle auf gegenüberliegenden Seiten herausgeführt wird; und die Hülle geschlossen wird, wobei die Folierung zwischen den zwei Hüllensegmenten klemmend fixiert wird.

12. Verfahren nach Anspruch 11, **dadurch gekennzeichnet, dass**
der Schwerpunkt (19) des Verpackungsinhalts (11) bestimmt wird;
der Verpackungsinhalt anschliessend durch Einschliessen zwischen zwei Teilfolien (28a, 28b) so foliert wird, dass sich die ergebende Folierung (28) ausserhalb des Verpackungsinhalts in einer Schwerpunktsebene (27) erstreckt, die durch den Schwerpunkt des Verpackungsinhalts verläuft;
der folierte Verpackungsinhalt so in die Hülle (12, 29) eingebracht wird, dass die Schwerpunktsebene (27) mit der Trennebene (13) der Hülle zusammenfällt; und
der folierte Verpackungsinhalt so in der Trennebene verschoben wird, dass der Schwerpunkt des Verpackungsinhalts im Mittelpunkt der Hülle liegt.

## Claims

1. A transportable packaging unit (10') that comprises a packaging content (11), a shell (12, 29) that surrounds the packaging content (11), and a connecting means (16, 28) that connects the packaging content (11) to the shell (12, 29), wherein the surrounding shell (12, 29) has the outer shape of a rollable body, wherein the connecting means (16, 28) fixes the packaging content (11) in the shell (12, 29), and wherein the shell has a two-piece design and comprises two shell segments (12a, 12b) that abut on one another in a parting plane (13), **characterized in that** the connecting means comprises a film covering (16, 28a, 28b) that surrounds the packaging content and that is led out on opposite sides in the parting plane of the shell, and at that location is fixed between the two shell segments by clamping.

2. The packaging unit according to Claim 1, **characterized in that** the shell (12, 29) has a circular shape, preferably a cylindrical shape or barrel shape (60, 61, 62) or a spherical shape, or that the shell preferably has a polyhedral shape.

3. The packaging unit according to one of Claims 1 to 2, **characterized in that** the packaging content (11) is covered with film, by enclosing it between two partial films (28a, 28b), in such a way that the resulting film covering (28) extends outside the packaging content in a centre of gravity plane (27) that passes through the centre of gravity (19) of the packaging content.

4. The packaging unit according to one of Claims 1 to 3, **characterized in that** the centre of gravity (19) of the packaging content (11) is situated at the centre of the shell (12, 29).

5. The packaging unit according to Claim 1, **characterized in that** the connecting means (16, 28) is fixedly connected to the shell (12, 29) and/or to the packaging content (11), the connecting means preferably being part of the shell (34) or part of the packaging content (11).

6. The packaging unit according to Claim 1, **characterized in that** the connecting means further comprises spacers (15a-d) that keep the packaging content (11) at a distance from the shell (12), the spacers (15a-d) preferably having gas-filled cavities, or that the connecting means (16, 28) elastically fixes the packaging content (11) in the shell (12, 29).

7. The packaging unit according to Claim 1, **characterized in that** at least one element (43, 50) that contains direct or indirect information concerning the content and that is queryable from the outside is arranged on the packaging unit (10'), the at least one element containing information concerning the content preferably being an RFID element (43) and/or a barcode (50).

8. The packaging unit according to Claim 1, **characterized in that** the shell (12, 29) has a centre or a centre axis, respectively, that the packaging content (11) has a centre of gravity (19), and that the packaging content (11) is arranged in the shell (12, 29) in such a way that the centre of gravity (19) of the packaging content (11) approximately coincides with the centre, or lies on the centre axis, respectively.

9. The packaging unit according to Claim 1, **characterized in that** the shell (12, 29) is composed of two similar halves (12a, 12b) that engage with one another (17) in the assembled state.

10. The packaging unit according to Claim 9, **characterized in that** snap-in closure devices (41a, b) are provided in the connecting area of the similar halves (12a, b) for the mutual engagement of the similar halves (12a, b), or that lockable closure elements (54, 55) are arranged in the connecting area of the similar halves (12a, b) for the mutual engagement of the similar halves (12a, b).

11. A method for producing a packaging unit according to one of Claims 1 to 5, **characterized in that** in a first step the packaging content (11) is provided, that in a second step the shell (12, 29) is provided, the shell having a two-piece design and comprising two shell segments (12a, 12b) that abut on one another in a parting plane (13), and the shell being opened or being held open, and that in a third step a connecting means (16, 28) that comprises a film covering (16, 28a, 28b) is connected to the packaging content, the film covering surrounding the packaging content; the packaging content (11) together with the connecting means is introduced into the open shell (12, 29), the film covering being led out on opposite sides in the parting plane of the shell; and the shell is closed, the film covering being fixed between the two shell segments by clamping.

12. The method according to Claim 11, **characterized in that**
the centre of gravity (19) of the packaging content (11) is determined;
the packaging content is subsequently covered with film, by enclosing it between two partial films (28a, 28b), in such a way that the resulting film covering (28) extends outside the packaging content in a centre of gravity plane (27) that passes through the centre of gravity of the packaging content;
the packaging content covered with film is introduced into the shell (12, 29) in such a way that the centre of gravity plane (27) coincides with the parting plane (13) of the shell; and
the packaging content covered with film is moved in the parting plane in such a way that the centre of gravity of the packaging content is situated at the centre of the shell.

## Revendications

1. Unité d'emballage transportable (10') comprenant un contenu d'emballage (11), une enveloppe (12, 29) entourant le contenu d'emballage (11), et un moyen de liaison (16, 28) reliant le contenu d'emballage (11) à l'enveloppe (12, 29), l'enveloppe (12, 29) ayant la forme extérieure d'un corps enroulable (16, 28), le moyen de liaison (16, 28) fixant le contenu d'emballage (11) dans l'enveloppe (12, 29), et l'enveloppe étant constituée de deux parties et comprenant deux segments d'enveloppe (12a, 12b) se rejoignant dans un plan de séparation (13), **caractérisé en ce que** le moyen de liaison comprend un revêtement par filmage (16, 28a, 28b) qui entoure le contenu d'emballage et qui est extrait dans le plan de séparation de l'emballage sur des côtés opposés où il est fixé par serrage entre les deux segments d'enveloppe.

2. Unité d'emballage selon la revendication 1, **caractérisée en ce que** l'enveloppe (12, 29) a une forme circulaire, de préférence une forme cylindrique ou une forme de barillet (60, 61, 62) ou une forme sphérique, ou **en ce que** l'enveloppe a de préférence une forme polyédrique.

3. Unité d'emballage selon l'une des revendications 1 à 2, **caractérisée en ce que** le contenu d'emballage (11) est filmé par insertion entre deux parties de film (28a, 28b) de telle sorte que le filmage résultant (28) s'étend à l'extérieur du contenu d'emballage dans un plan de centre de gravité (27) qui passe par le centre de gravité (19) du contenu d'emballage.

4. Unité d'emballage selon l'une des revendications 1 à 3, **caractérisée en ce que** le centre de gravité (19) du contenu d'emballage (11) est situé au centre de l'enveloppe (12, 29).

5. Unité d'emballage selon la revendication 1, **caractérisée en ce que** le moyen de liaison (16, 28) est relié de manière fixe à l'enveloppe (12, 29) et/ou au contenu d'emballage (11), le moyen de liaison fait de préférence parte de l'enveloppe (34) ou du contenu d'emballage (11).

6. Unité d'emballage selon la revendication 1, **caractérisé en ce que** le moyen de liaison comprend en outre des entretoises (15a-d) qui maintiennent le contenu d'emballage (11) à distance de l'enveloppe (12), les entretoises (15a-d) comportant de préférence des cavités remplies de gaz, ou **en ce que** le moyen de liaison (16, 28) fixe élastiquement le contenu d'emballage (11) dans l'enveloppe (12, 29).

7. Unité d'emballage selon la revendication 1, **caractérisée en ce qu'**au moins un élément (43, 50) contenant des informations directe ou indirecte sur le contenu est disposée sur l'unité d'emballage (10') de manière interrogeable de l'extérieur, l'au moins un élément (43, 50) contenant des informations directe ou indirecte sur le contenu étant de préférence un élément RFID (43) et/ou un code à barres (50).

8. Unité d'emballage selon la revendication 1, **caractérisée en ce que** l'enveloppe (12, 29) possède un centre ou un axe central, **en ce que** le contenu d'emballage (11) possède un centre de gravité (19) et **en ce que** le contenu d'emballage (11) est situé dans l'enveloppe (12, 29) de telle manière que le centre de gravité (19) du contenu d'emballage (11) coïncide à peu près avec le centre ou se trouve sur l'axe central.

9. Unité d'emballage selon la revendication 1, **caractérisée en ce que** l'enveloppe (12, 29) est constituée de deux moitiés similaires (12a, 12b) qui s'engagent l'une dans l'autre (17) à l'état assemblé.

10. Unité d'emballage selon la revendication 9, **caractérisée en ce que** des dispositifs de fermeture à encliquetage (41a, b) sont prévus dans la zone de liaison des moitiés similaires (12a, b) pour l'engagement des moitiés similaires (12a, b) l'une dans l'autre ou **en ce que** des éléments de fermeture verrouillables (54, 55) sont disposés dans la zone de liaison des moitiés similaires (12a, b) pour l'engagement des moitiés similaires (12a, b) l'une dans l'autre.

11. Procédé de fabrication d'une unité d'emballage selon l'une des revendications 1 à 5, **caractérisée en ce que** le contenu d'emballage (11) est mis on place dans une première étape, l'enveloppe (12, 29) est mis on place dans une deuxième étape, l'enveloppe étant constituée de deux parties et comprenant deux segments d'enveloppe (12a, 12b) se rejoignant dans un plan de séparation (13), et l'enveloppe étant ouverte ou étant mis en place ouverte, et **en ce qu'**un moyen de liaison (16, 28) comprenant un revêtement par filmage (16, 28a, 28b) est relié au contenu d'emballage dans une troisième étape, le revêtement par filmage entourant le contenu d'emballage ; le contenu d'emballage (11) est introduit conjointement avec le moyen de liaison dans l'enveloppe (12, 29), le revêtement par filmage étant extrait dans le plan de séparation de l'emballage sur des côtés opposés ; et l'enveloppe est fermée, le revêtement par filmage étant fixé par serrage entre les deux segments d'enveloppe.

12. Procédé selon la revendication 11, **caractérisé en ce que**
le centre de gravité (19) du contenu d'emballage (11) est déterminé ;
le contenu d'emballage (11) est filmé par insertion entre deux parties de film (28a, 28b) de telle sorte que le filmage résultant (28) s'étend à l'extérieur du contenu d'emballage dans un plan de centre de gravité (27) qui passe par le centre de gravité (19) du contenu d'emballage ;
le contenu d'emballage filmé est introduit dans l'enveloppe (12, 29) de telle manière que le plan de centre de gravité (27) coïncide avec le plan de séparation (13) de l'enveloppe ; et
Le contenu d'emballage est déplacé dans le plan de séparation de telle sorte que le centre de gravité du contenu d'emballage est situé au centre de l'enveloppe.
